# EUROPEAN PATENT SPECIFICATION

(11) **EP 2 182 575 B1**
(45) Date of publication and mention of the grant of the patent: **08.03.2017**
(21) Application number: 09174502.6
(22) Date of filing: 29.10.2009
(51) Int. Cl.: H01M 10/48, B60L 11/18, H04L 12/24, G06Q 50/06, H01M 10/42

(54) **CARTRIDGE BATTERY, MANAGEMENT DEVICE, BATTERY SYSTEM, MANAGEMENT METHOD, AND PROGRAM**
KARTUSCHENBATTERIE, VERWALTUNGSVORRICHTUNG, BATTERIESYSTEM, VERWALTUNGSVERFAHREN UND PROGRAMM
BATTERIE DE CARTOUCHE, DISPOSITIF DE GESTION, SYSTÈME DE BATTERIE, PROCÉDÉ DE GESTION, ET PROGRAMME

(30) Priority: 31.10.2008 JP 2008281255
(43) Date of publication of application: 05.05.2010
(73) Proprietor: NEC Corporation, Minato-ku Tokyo 108-8001 (JP)
(72) Inventor: Yasuda, Toru, Tokyo 108-8001 (JP); Nishiyama, Tetsuo, Tokyo 108-8001 (JP)
(74) Representative: Vossius & Partner Patentanwälte Rechtsanwälte mbB

(56) References cited:
- WO-A1-03/098908
- WO-A1-2007/105579
- JP-A- 5 227 669
- JP-A- 2005 339 187
- US-A1- 2003 114 105
- US-A1- 2005 048 359

## Description

The present invention relates to a cartridge battery, a management device, a battery system, a management method, and a program.

An electric motorcar travels, using battery electric power as an energy source. There has been proposed, as disclosed in Japanese Unexamined Patent Application, First Publication No. 2001-016706 for example, to use exchangeable cartridge batteries when equipping an electric motorcar with batteries. US 2003/114105 A1 discloses a method, system, and computer readable medium which allow a short distance wireless network or networks to provide information to a telecommunication server, or other third party processing device, in order to make a business decision regarding a battery powered device.

There has been a demand for the smooth supply of electric power not only to electric motorcars but also to various types of electrically powered devices that are operated by electric power. With smooth supply of electric power, industrial activities and social activities are smoothly performed, and consequently industrial development can be expected.

An exemplary object of the present invention is to provide a cartridge battery, a management device, a battery system, a management method, and a program, capable of enabling the smooth execution of industrial activities and social activities.

The invention is defined according to the independent claims 1,7,8.

According to the present invention, industrial activities and social activities can be smoothly performed.

Hereunder, an exemplary embodiment of the present invention is described, with reference to the accompanying drawings.
FIG. 1 is a block diagram showing an example of a battery system according to an exemplary embodiment of the present invention.
FIG. 2 shows an example of a cartridge battery according to the exemplary embodiment of the present invention.
FIG. 3 shows an example of the battery system according to the exemplary embodiment of the present invention.
FIG. 4 is a perspective view showing an example of an electric motorcar according to the exemplary embodiment of the present invention.
FIG. 5 shows an example of the battery system according to the exemplary embodiment of the present invention.
FIG. 6 shows an example of the battery system according to the exemplary embodiment of the present invention.
FIG. 7 is a flow chart showing an example of an operation of the battery system according to the exemplary embodiment of the present invention.

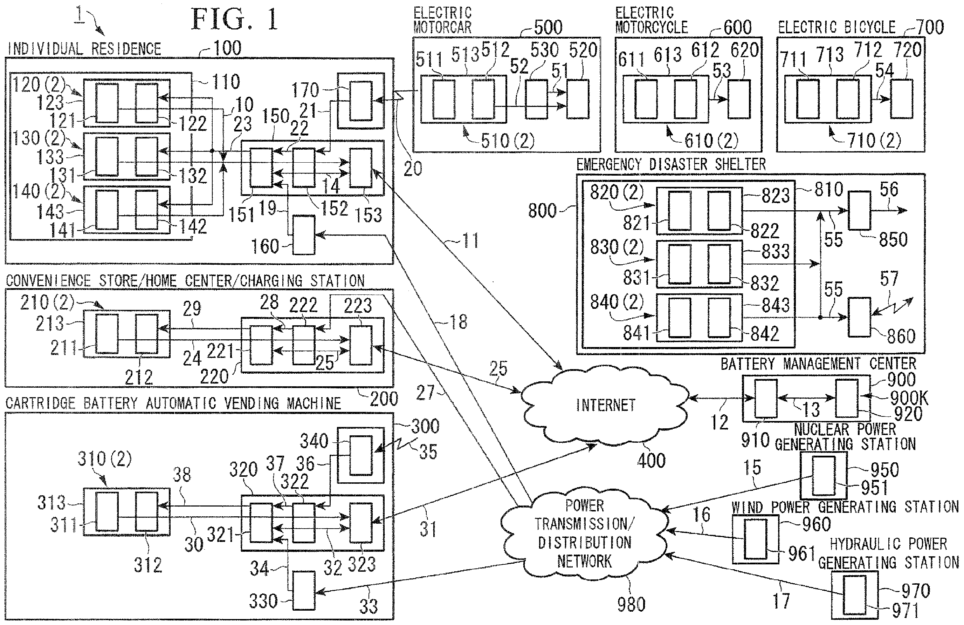

In FIG. 1, the battery system 1 is provided with an individual residence 100, a shop 200, an automatic vending machine 300, an electric motorcar 500, an electric motorcycle 600, an electric bicycle 700, and an emergency disaster shelter 800, which are respectively present at difference locations. A plurality of cartridge batteries 120, 130, and 140 are disposed at the individual residence 100. A cartridge battery 210 is disposed at the shop 200 such as convenience store, home center, and charging station. A cartridge battery 310 is disposed in the automatic vending machine 300 that sells cartridge batteries. A cartridge battery 510 is disposed on the electric motorcar 500. A cartridge battery 610 is disposed on the electric motorcycle 600. A cartridge battery 710 is disposed on the electric bicycle 700. A plurality of cartridge batteries 820, 830, and 840 are disposed at the emergency disaster shelter 800.

The cartridge batteries 120, 130, and 140 are respectively provided with batteries 122, 132, and 142, which are rechargeable type batteries, and housings 123, 133, and 142 that respectively house the batteries 122, 132, and 142. The cartridge battery 210 is provided with a battery 212, which is a rechargeable type battery, and a housing 213 that houses the battery 212. The cartridge battery 310 is provided with a battery 312, which is a rechargeable type battery, and a housing 313 that houses the battery 312. The cartridge battery 510 is provided with a battery 512, which is a rechargeable type battery, and a housing 513 that houses the battery 512. The cartridge battery 610 is provided with a battery 612, which is a rechargeable type battery, and a housing 613 that houses the battery 612. The cartridge battery 710 is provided with a battery 712, which is a rechargeable type battery, and a housing 713 that houses the battery 712. The cartridge batteries 820, 830, and 840 are respectively provided with batteries 822, 832, and 842, which are rechargeable type batteries, and housings 823, 833, and 843 that respectively house the batteries 822, 832, and 842.

That is to say, each of the cartridge batteries 120, 130, 140, 210, 310, 510, 610, 710, 820, 830, and 840 is a so-called battery pack that is provided with a rechargeable type battery (secondary battery) and a housing that houses the rechargeable type battery.

In the present embodiment, the outer shape and the size of each of the cartridge batteries 120, 130, and 140, the cartridge battery 210, the cartridge battery 310, the cartridge battery 510, the cartridge battery 610, the cartridge battery 710, and the cartridge batteries 820, 830, and 840, are the same and are of the same standard. In the following description, accordingly, the cartridge batteries 120, 130, 140, 210, 310, 510, 610, 710, 820, 830, and 840 are collectively referred to as cartridge batteries 2.

Moreover, in the following description, accordingly, the batteries 122, 132, 142, 212, 312, 512, 612, 712, 822, 832, and 842, which are rechargeable type batteries, are collectively referred to as batteries 2V.

Moreover, in the following description, accordingly, the housings 123, 133, 143, 213, 313, 513, 613, 713, 823, 833, and 843, are collectively referred to as housings 2H.

Moreover, the cartridge battery 120 has a cartridge battery identifier (ID) 121. The cartridge battery 130 has a cartridge battery ID 131. The cartridge battery 140 has a cartridge battery ID 141. The cartridge battery 210 has a cartridge battery ID 211. The cartridge battery 310 has a cartridge battery ID 311. The cartridge battery 510 has a cartridge battery ID 511. The cartridge battery 610 has a cartridge battery ID 611. The cartridge battery 710 has a cartridge battery ID 711. The cartridge battery 820 has a cartridge battery ID 821. The cartridge battery 830 has a cartridge battery ID 831. The cartridge battery 840 has a cartridge battery ID 841.

The cartridge batteries 2 are of sufficient size and weight so as to allow easy portability.

Moreover, the battery system 1 is disposed at the individual residence 100, and is provided with a charger 150 capable of charging the cartridge batteries 2 (batteries 2V), a charger 220 that is disposed at the shop 200 and is capable of charging the cartridge batteries 2 (batteries 2V), and a charger 320 that is disposed in the automatic vending machine 300 and is capable of charging the cartridge batteries 2 (batteries 2V).

Moreover, the battery system 1 is provided with an operating terminal 153 disposed at the individual residence 100, an operating terminal 223 disposed at the shop 200, and an operating terminal 323 disposed in the automatic vending machine 300. In the present embodiment, the operating terminal 153 is disposed in the charger 150. Similarly, the operating terminal 223 is disposed in the charger 220, and the operating terminal 323 is disposed in the charger 320.

Moreover, the charger 150, in addition to the operating terminal 153, has a charging control circuit 151 and a power supply converter 152. The charger 220, in addition to the operating terminal 223, has a charging control circuit 221 and a power supply converter 222. The charger 320, in addition to the operating terminal 323, has a charging control circuit 321 and a power supply converter 322.

In the present embodiment, the individual residence 100, in addition to the charger 150, is provided with a home battery 110, a power supply converter 160, and a solar power generator 170. The home battery 110 includes a plurality of the cartridge batteries 120, 130, and 140.

Moreover, the automatic vending machine 300, in addition to the charger 320, is provided with a power supply converter 330 and a solar power generator 340.

The power supply converter 160 of the individual residence 100, through a power transmission/distribution network 980, is connected respectively to a power generator 951 at a nuclear power generating station 950, a power generator 961 at a wind power generating station 960, and a power generator 971 at a hydraulic power generating station 970.

The power supply converter 222 of the shop 200, through the power transmission/distribution network 980, is connected respectively to the power generator 951 at the nuclear power generating station 950, the power generator 961 at the wind power generating station 960, and the power generator 971 at the hydraulic power generating station 970.

The power supply converter 330 of the automatic vending machine 300, through the power transmission/distribution network 980, is connected respectively to the power generator 951 at the nuclear power generating station 950, the power generator 961 at the wind power generating station 960, and the power generator 971 at the hydraulic power generating station 970.

The electric motorcar 500, in addition to the cartridge battery 510, has a main battery 520 and an electric motor 530. The main battery 520 equipped on the electric motorcar 500 is fixed on the electric motorcar 500. That is to say, the main battery 520 is a fixed battery in the electric motorcar 500.

The electric motorcycle 600, in addition to the cartridge battery 610, has an electric motor 620.

The electric bicycle 700, in addition to the cartridge battery 710, has an electric motor 720.

The emergency disaster shelter 800 is provided with an emergency battery 810, a power supply converter 850, and an emergency communication device 860. The emergency battery 810 includes a plurality of the cartridge batteries 820, 830, and 840.

Moreover, the battery system 1 is provided with a management device 900K that manages the cartridge batteries 2. The management device 900K is disposed at a battery management center 900 that is present at a location different from the individual residence 100, the shop 200, the automatic vending machine 300, the electric motorcar 500, the electric motorcycle 600, the electric bicycle 700, and the emergency disaster shelter 800. The management device 900K includes a management server (battery management server) 910 and a database (battery charging database) 920. The management device 900K is capable of managing the cartridge batteries 2 through the Internet (telecommunication line) 400.

The operating terminal 153 at the individual residence 100 is connected, through the Internet 400, to the management server 910 at the battery management center 900.

The operating terminal 223 at the shop 200 is connected, through the Internet 400, to the management server 910 at the battery management center 900.

The operating terminal 323 at the automatic vending machine 300 is connected, through the Internet 400, to the management server 910 at the battery management center 900.

At the individual residence 100, the cartridge battery ID 121 can output an ID 10 to the operating terminal 153. Similarly, the cartridge battery ID 131 can output the ID 10 to the operating terminal 153, and the cartridge battery ID 141 can output the ID 10 to the operating terminal 153.

The operating terminal 153 outputs Internet data 11. An input of the Internet data 11, via the Internet 400, is received as Internet data 12 on the management server 910 of the management device 900K. The management server 910 and the database 920 are connected to each other via a signal cable, and mutually input and output battery management data 13.

At the shop 200, the cartridge battery ID 211 can output an ID 24 to the operating terminal 223.

The operating terminal 223 outputs Internet data 25. An input of the Internet data 25, via the Internet 400, is received as Internet data 12 on the management server 910 of the management device 900K.

In the automatic vending machine 300, the cartridge battery ID 311 outputs an ID 30 to the operating terminal 323. The operating terminal 323 outputs Internet data 31. An input of the Internet data 31, via the Internet 400, is received as Internet data 12 on the management server 910 of the management device 900K.

The power generator 951 at the nuclear power generating station 950 outputs nuclear-generated electric power 15. An output of the nuclear-generated electric power 15 from the power generator 951 is received, via the power transmission/distribution network 980, as an input of household power supply 18 to the power supply converter 160 at the individual residence 100.

Moreover, an output of the nuclear-generated electric power 15 from the power generator 951 is received, via the power transmission/distribution network 980, as an input of commercial power supply 27 to the power supply converter 222 at the shop 200.

Furthermore, an output of the nuclear-generated electric power 15 from the power generator 951 is received as an input of commercial power supply 33 to the power supply converter 330 in the automatic vending machine 300.

Moreover the power generator 961 at the wind power generating station 960 outputs wind-generated electric power 16. An output of the wind-generated electric power 16 from the power generator 961 is received, via the power transmission/distribution network 980, as an input of household power supply 18 to the power supply converter 160 at the individual residence 100.

Furthermore, an output of the wind-generated electric power 16 from the power generator 961 is received as an input of commercial power supply 27 to the power supply converter 222 at the shop 200.

Moreover, an output of the wind-generated electric power 16 from the power generator 961 is received as an input of commercial power supply 33 to the power supply converter 330 in the automatic vending machine 300.

Furthermore the power generator 971 at the hydraulic power generating station 970 outputs hydraulic-generated electric power 17. An output of the hydraulic-generated electric power 17 from the power generator 971 is received, via the power transmission/distribution network 980, as an input of household power supply 18 to the power supply converter 160 at the individual residence 100.

Moreover, an output of the hydraulic-generated electric power 17 from the power generator 971 is received as an input of commercial power supply 27 to the power supply converter 222 at the shop 200.

Furthermore, an output of the hydraulic-generated electric power 17 from the power generator 971 is received as an input of commercial power supply 33 to the power supply converter 330 in the cartridge battery automatic vending machine 300.

At the individual residence 100, if solar light 20 is irradiated on the solar power generator 170, the solar power generator 170 outputs solar-generated electric power 21 to the power supply converter 152. The power supply converter 152 outputs cartridge charging power supply (electric power) 22 to the charging control circuit 151.

Moreover, at the individual residence 100, the power supply converter 160 outputs cartridge charging power supply (electric power) 19 to the charging control circuit 151.

The charging control circuit 151 outputs cartridge charging power supply (electric power) 23 respectively to the batteries 122, 132, and 142 of the cartridge batteries 120, 130, and 140 of the home battery 110. Thereby, the batteries 122,132, and 142 are charged with the electric power 23 supplied from the charging control circuit 151 of the charger 150.

As described above, in the present embodiment, the charger 150 at the individual residence 100 is capable of charging the batteries 122,132, and 142, based on at least one of the nuclear-generated electric power 15, the wind-generated electric power 16, the hydraulic-generated electric power 17, and the solar-generated electric power 21,

At the shop 200, the power supply converter 222 outputs cartridge charging power supply (electric power) 28 to the charging control circuit 221.

The charging control circuit 221 outputs cartridge charging power supply (electric power) 29 to the battery 212 of the cartridge battery 210. Thereby, the battery 212 is charged with the electric power 29 supplied from the charging control circuit 221 of the charger 220.

As described above, in the present embodiment, the charger 220 at the shop 200 is capable of charging the battery 212, based on at least one of the nuclear-generated electric power 15, the wind-generated electric power 16, and the hydraulic-generated electric power 17.

In the automatic vending machine 300, if solar light 35 is irradiated on the solar power generator 340, the solar power generator 340 outputs solar-generated electric power 36 to the power supply converter 322. The power supply converter 322 outputs cartridge charging power supply (electric power) 37 to the charging control circuit 321.

Moreover, in the automatic vending machine 300, the power supply converter 330 outputs cartridge charging power supply (electric power) 34 to the charging control circuit 321.

The charging control circuit 321 outputs cartridge charging power supply (electric power) 38 to the battery 312 of the cartridge battery 310. Thereby, the battery 312 is charged with the electric power 38 supplied from the charging control circuit 321 of the charger 320.

As described above, in the present embodiment, the charger 320 in the automatic vending machine 300 is capable of charging the batteries 312, based on at least one of the nuclear-generated electric power 15, the wind-generated electric power 16, the hydraulic-generated electric power 17, and the solar-generated electric power 36.

In the electric motorcar 500, the battery 512 of the cartridge battery 510 can output cartridge battery output driving power supply (electric power) 52 to the electric motor 530. Moreover, the main battery 520 can also output main battery output driving power supply (electric power) 51 to the electric motor 530.

In the electric motorcycle 600, the battery 612 of the cartridge battery 610 can output cartridge battery output driving power supply (electric power) 53 to the electric motor 620.

In the electric bicycle 700, the battery 712 of the cartridge battery 710 can output cartridge battery output driving power supply (electric power) 54 to the electric motor 720.

The electric motorcar 500 can travel based on the driving power of the electric motor 530. The electric motorcar 500 can travel respectively between the individual residence 100, the shop 200, the automatic vending machine 300, and the emergency disaster shelter 800.

The electric motorcycle 600 can travel based on the driving power of the electric motor 620. The electric motorcycle 600 can travel respectively between the individual residence 100, the shop 200, the automatic vending machine 300, and the emergency disaster shelter 800.

The electric bicycle 700 can travel based on the driving power of the electric motor 720. The electric bicycle 700 can travel respectively between the individual residence 100, the shop 200, the automatic vending machine 300, and the emergency disaster shelter 800.

Therefore, by having the electric motorcar 500, the electric motorcycle 600, or the electric bicycle 700 travel in a state where the cartridge battery 2 is equipped on at least one of the electric motorcar 500, the electric motorcycle 600, and the electric bicycle 700, the cartridge battery 2 can travel (be transported) respectively between the individual residence 100, the shop 200, the automatic vending machine 300, and the emergency disaster shelter 800.

At the emergency disaster shelter 800, the battery 822 of the cartridge battery 820 of the emergency battery 810 can output cartridge battery output emergency power supply (electric power) 55 to the power supply converter 850 and the emergency communication device 860.

Similarly, the battery 832 of the cartridge battery 830 can output the cartridge battery output emergency power supply (electric power) 55 to the power supply converter 850 and the emergency communication device 860.

Similarly, the battery 842 of the cartridge battery 840 can output the cartridge battery output emergency power supply (electric power) 55 to the power supply converter 850 and the emergency communication device 860.

The power supply converter 850 can output emergency power supply (electric power) 56 based on the electric power 55 from the emergency battery 810. Moreover, the emergency communication device 860 operates based on the electric power 55 from the emergency battery 810 and can thereby output emergency communication data 57.

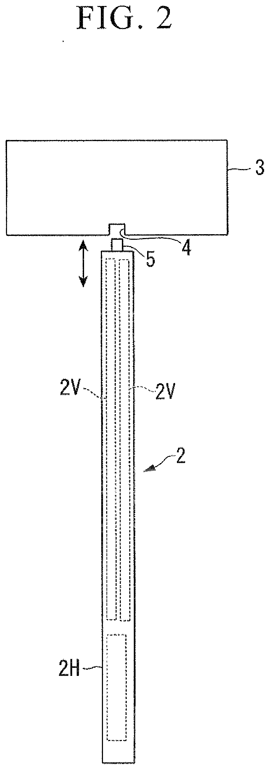

FIG. 2 is a diagram showing an example of the cartridge battery 2 according to the present embodiment. As shown in FIG.2, the cartridge battery 2 is provided with batteries 2V, and a connection section 5 to be releasably connected to a connector 4 of an electrically powered device 3 that operates on electric power. The cartridge battery 2 has the connection section 5 thereof connected to the connector 4 of the electrically powered device 3 to thereby supply electric power to the electrically powered device 3.

The electrically powered device 3 is disposed respectively at the individual residence 100, the shop 200, and the emergency disaster shelter 800, and in the automatic vending machine 300, the electric motorcar 500, the electric motorcycle 600, and the electric bicycle 700.

At the individual residence 100, for example, the connector 4 is provided on the home battery 110. The cartridge battery 2 has the connection section 5 thereof connected to the connector 4, and is capable, via the home battery 110, of supplying electric power to the electrically powered device 3 (such as a home electric appliance or electric equipment) disposed at the individual residence 100. Naturally, the connector 4 may be provided on the home electric appliance or electric equipment, and the connection section 5 may be connected to the connector 4.

Similarly, at the shop 200 or in the automatic vending machine 300, to the connector 4 of the electrically powered device 3 (such as lighting equipment and air conditioning equipment) deposed at the shop 200 or in the automatic vending machine 300, there is connected the connection section 5 of the cartridge battery 2. The cartridge battery 2 has the connection section 5 thereof connected to the connector 4, and is capable of supplying electric power to the electrically powered device 3 disposed at the shop 200 or in the automatic vending machine 300.

Moreover, examples of the electrically powered device 3 in the electric motorcar 500, the electric motorcycle 600, and the electric bicycle 700 include the aforementioned electric motors 520, 620, and 720. The cartridge battery 2 has the connection section 5 thereof connected to the connector 4 provided on the electric motors 520, 620, and 720 (electrically powered device 3), and is capable of supplying electric power to the electric motors 520, 620, and 720.

Moreover, examples of the electrically powered device 3 at the emergency disaster shelter 800 include the aforementioned power supply converter 850 and the emergency communication device 860. In a case where the connector 4 is provided on the emergency battery 810, the cartridge battery 2 has the connection section 5 thereof connected to the connector 4, and is capable, via the emergency battery 810, of supplying electric power to the electrically powered device 3 (the power supply converter 850 and the emergency communication device 860) disposed at the emergency disaster shelter 800. Naturally, the connector 4 may be provided on the power supply converter 850 and the emergency communication device 860, and the connection section 5 may be connected to the connector 4.

In the present embodiment, each connector 4 of the electrically powered device 3 disposed respectively at the individual residence 100, the shop 200, and the emergency disaster shelter 800, and in the automatic vending machine 300, the electric motorcar 500, the electric motorcycle 600, and the electric bicycle 700, has the same structure and is of the same standard. Moreover, as described above, the outer shape and the size of each of the plurality of cartridge batteries 2, are the same. Moreover, the connection section 5 of each of the plurality of the cartridge batteries 2, has the same structure and is of the same standard. Therefore, the cartridge batteries 2 have the connection section 5 thereof respectively connected to these connectors 4 and are capable of supplying electric power to each electrically powered device 3. Moreover, the connection section 5 is releasably connected to the connector 4, and it is consequently possible to easily replace the cartridge battery 2.

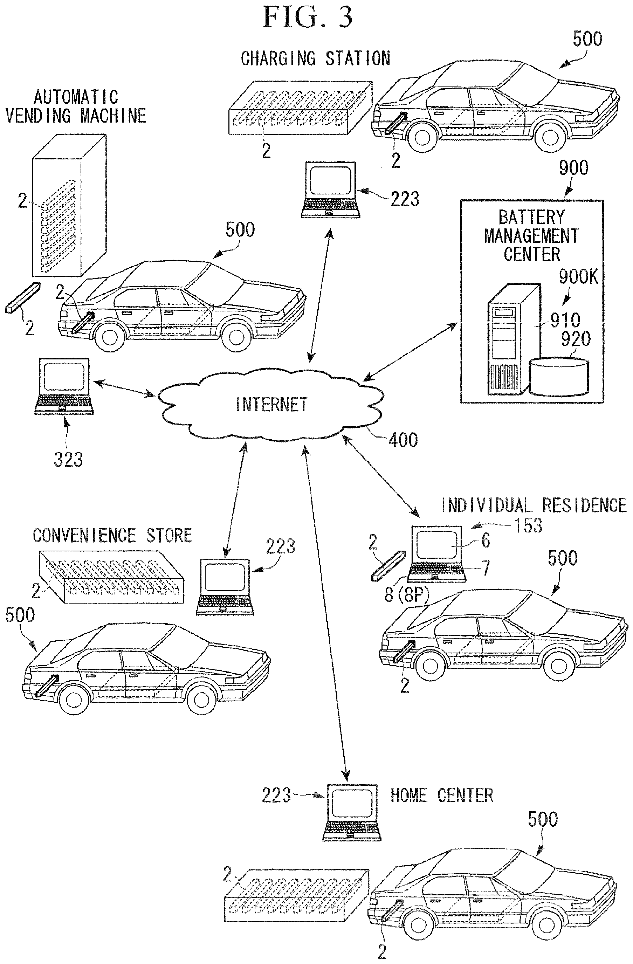

Next, the operating terminal 153 disposed at the individual residence 100 is described, with reference to the schematic diagram of FIG. 3. As described above, the operating terminal 153 is connected, through the Internet 400, to the management server 910 at the battery management center 900. The operating terminal 153 is provided with a display device 6 such as flat panel display, an input device 7 such as keyboard, and a processing device 8 including a computer. In the present embodiment, the processing device (computer) 8 executes processing based on commands of a program 8P. The management device 900K and the processing device 8 are connected to each other through the Internet 400, and are capable of executing transmission and reception of signals and data. Moreover, the display device 6 is capable of displaying output information of the management device 900K output through the Internet 400. Furthermore, the display device 6 is capable of displaying information based on signals and data output from the processing device 8 (computer).

Moreover, the processing device 8 is provided with a reading function capable of obtaining information of the IDs 121, 131, and 141, and an updating function capable of updating information of the IDs 121,131, and 141, and it is capable of executing at least either one of obtaining and updating the information of the IDs 121, 131, and 141.

Furthermore, the management device 900K is capable, through the Internet 400, of executing at least either one of obtaining and updating the information of the IDs 121, 131, and 141. In the present embodiment, the management device 900K, through the Internet 400, supplies command signals to the processing device 8, to thereby make the processing device 8 execute at least either one of obtaining and updating the information of the IDs 121, 131, and 141.

The operating terminal 223 disposed at the shop 200 including a convenience store, home center, and charging station, and the operating terminal 323 disposed in the automatic vending machine 300, are of a configuration similar to that of the operating terminal 153 disposed at the individual residence 100. Therefore, descriptions of the operating terminals 223 and 323 are omitted. The management device 900K is capable, through the Internet 400, of executing transmission and reception between the operating terminals 223 and 323, and is capable of supplying command signals to the processing device 8 of the operating terminals 223 and 323.

Next, there is described an example of an operation of the battery system 1 having the configuration described above. Hereunder, there is described an example of an operation concerning the operating terminal 153 and the cartridge battery 120 at the individual residence 100.

The operating terminal 153 at the individual residence 100 reads an ID 10 from the cartridge battery ID 121 of the cartridge battery 120 connected to the charger 150, and transmits, through the Internet 400, the read ID 10 as Internet data 11 to the management server 910 of the management device 900K at the battery management center 900.

The ID 10 includes information related to the battery 122 of the cartridge battery 120. The information related to the battery 122 includes information related to usage history of the cartridge battery 120.

The information related to the usage history includes information related to charging history of the battery 122.

For example, the usage history related information includes at least one of a number of charges, an interval of charges, and a time of charges made to the battery 122. The cartridge battery ID 121, when the battery 122 is charged, updates and stores the information related to the history of this charging.

These pieces of information included in the ID 10 are transmitted, through the Internet 400, from the operating terminal 153 to the management device 900K. In the following description, the information (signal) related to the cartridge battery 2 to be transmitted to the management device 900K by the operating terminal 153 that has read the information included in the ID 10, is appropriately referred to as first information.

Moreover, in the present embodiment, the management device 900K transmits the information related to the cartridge battery 2 to the operating terminal 153 through the Internet 400. In the following description, the information (signal) related to the cartridge battery 2 to be transmitted to the operating terminal 153 by the management device 900K, is appropriately referred to as second information.

The management device 900K, based on the received first information (information of the ID 10), transmits, to the operating terminal 153, information related to the battery 122 of the cartridge battery 120 corresponding to the ID 10. The second information includes information related to usage history of the cartridge battery 120. That is to say, in the present embodiment, between the operating terminal 153 and the management device 900K, there are transmitted and received the information related to the battery 122 of the cartridge battery 120 and the information related to the usage history of the cartridge battery 120.

Moreover, in the present embodiment, the second information includes information related to the performance of the cartridge battery 120 and risk information.

The information related to the performance of the cartridge battery 120 includes the amount of accumulated electricity (accumulated electric power) in a case where the battery 122 of the cartridge battery 120 is fully charged.

The risk information includes information related to the amount of accumulated electricity (remaining amount of accumulated electricity) of the cartridge battery 120. Moreover, the risk information includes information related to the degree of deterioration of the battery 122 because of usage thereof. For example, there is a possibility that the performance of the battery 122 (charging capability and the like) may be deteriorated according to the number, intervals, and time of charging, or to the time of usage. Based on the information related to the usage history of the cartridge battery 120 including the number, intervals, and time of charging, or the time of usage, the management device 900K derives the degree of deterioration in the performance (charging capability and the like) of the battery 122, and transmits the derived degree to the operating terminal 153 as the second information. Moreover, based on the information related to the usage history of the cartridge battery 120, the management device 900K transmits information related to the amount of accumulated electricity of the cartridge battery 120 (battery 122) to the operating terminal 153 as the second information.

The operating terminal 153 displays, on the display device 6, the second information output from the management device 900K.

Moreover, the management device 900K is capable of outputting the second information including the risk information not only to the operating terminal 153 but also to the operating terminals 223 and 323 through the Internet 400. Thus, the first information supplied from the individual residence 100 can be supplied, through the Internet 400, as the second information to the shop 200, the automatic vending machine 300, and the like.

The management device 900K is capable of deriving risk information based on the usage information of the cartridge battery 120 and the unique information of the battery 122. The usage information includes the information related to charging history of the battery 122 (at least one of the number, intervals, and time of charging), the time of usage, and the performance (electric power consumption) of the electrically powered device 3 for which the cartridge battery 120 is to be used. The unique information of the battery 122 includes the performance and product type of the battery, and battery information (specification) supplied by a battery maker. The usage information, for example, holds the ID 10, and the management device 900K is capable of obtaining the usage information based on the ID 10 that is supplied from the operating terminal 153 through the Internet 400. Moreover, the unique information of the battery 122 is a known value, and is held in the database 920.

In the present embodiment, the degree of deterioration of the battery 122 according to the usage (usage history) thereof is known information that is preliminarily found, for example, in a preliminary experiment or in a simulation. The known information includes information related to the number of charges allowed to be made on the battery 122 while allowing it to maintain the desired performance. The known information is stored in the database 920. The management device 900K is capable of deriving the degree of deterioration of the battery 122, according to the usage history obtained from the ID 10.

For example, the management server 910 can search on the database 920 for battery information such as charging history information, number of charging cycles (number of charges, intervals of charges, time of charging, and the like), battery product type, and battery maker of the battery 122 indicated by the ID 10 of the Internet data 12 that is transmitted from the operating terminal 153 through the Internet 400, and can output the battery information as the Internet data 12.

Moreover, the management server 910, based on the battery information such as the charging history information, number of charging cycles, battery product type, battery maker, and the like of the battery 122, estimates the accumulated electric power and risk in the battery 122 in a case where the battery 122 is fully charged under the conditions found in the battery information, and outputs them as the Internet data 12.

The management device 900K, based on the information related to the history of charging made on the battery 122 obtained from the ID 10, outputs, to the operating terminal 153, at least either one of a permitting signal and a non-permitting signal for charging the battery 122.

That is to say, the management device 900K, based on the information related to charging history and the information related to the number of charges allowed on the battery 122, which is the known information, outputs, to the operating terminal 153, at least either one of a permitting signal and a non-permitting signal.

The management device 900K compares the information related to the charging history and the information related to the number of allowed charges, and outputs a permitting signal to the operating terminal 153 in a case where the charging history is less than or equal to the number of allowed charges, and outputs a non-permitting signal to the operating terminal 153 in a case where the charging history exceeds the number of allowed charges.

In the present embodiment, the management device 900K, when outputting a permitting signal, derives an optimal charging method for charging the battery 122, based on the information related to the battery 122 and the information related to the charging history, and outputs, along with the permitting signal, a command signal related to the derived charging method to the operating terminal 153. Here, the information related to the battery 122 includes unique information such as the information related to charging history, the type (product type) of the battery 122, and the maker information of the battery 122. The charger 150 charges the battery 122 based on the command signal related to the optimal charging method transmitted from the management device 900K to the operating terminal 153. Thereby, the charger 150 can charge the battery 122 with the optimal charging method according to the unique performance of the battery 122.

In the charging method, for example, the amount of the electric power 23 supplied from the charging control circuit 151 to the battery 122, the time of charging, and the like, are designated. For example, the charging control circuit 151 controls the cartridge battery charging power supply 23 according to the instruction of the operating terminal 153 to thereby charge the battery 122. In the present embodiment, the power supply converter 152 converts the solar-generated electric power 21 generated by the solar power generator 170 into the cartridge battery charging power supply 22 of a power supply method and a voltage suitable for charging the battery 122. Moreover, the power supply converter 160 converts the household power supply 18 into the cartridge battery charging power supply 19 of a power supply method and a voltage suitable for charging the battery 122.

Moreover, the operating terminal 153 displays, on the display device 6, the information related to the battery 122 and the information related to the charging history. The operating terminal 153, for example, displays at least one of the number of charges, charging intervals, charging time, and degree of deterioration of the battery 122.

On the other hand, the management device 900K, when outputting a non-permitting signal, outputs, along with the non-permitting signal, a command signal for executing recovery of the cartridge battery 120. The operating terminal 153 displays, on the display device 6, an indication of instructing execution of recovery. Thereby, the cartridge battery 120 with the performance thereof having been deteriorated is excluded from circulation and, for example, sent to the maker of the battery 122 for maintenance or reuse. By recovering the cartridge battery, resource recovery is possible.

In the present embodiment, the management device 900K is capable of selecting a power generation method to be used for charging the battery 122, based on a signal input received from the input device 7 through the Internet 400. The display device 6 displays the result of the selection.

Moreover, the management device 900K is capable, based on the signal input received from the input device 7 through the Internet 400, of selecting a period of time for charging the battery 122. The display device 6 displays the result of the selection.

In the above description, there has been described above an example of an operation that is executed on the cartridge battery 120, using the operating terminal 153 at the individual residence 100 and the management device 900K. The battery system 1 is capable of executing, on the cartridge batteries 130 and 140, an operation similar to that executed on the cartridge battery 120 with use of the operating terminal 153 and the management device 900K.

Moreover, the battery system 1 is capable, with use of the operating terminal 223 and the management device 900K, of executing, on the cartridge battery 210, an operation similar to that executed on the cartridge battery 120 with use of the operating terminal 153 and the management device 900K.

Furthermore, the battery system I is capable, with use of the operating terminal 323 and the management device 900K, of executing, on the cartridge battery 310, an operation similar to that executed on the cartridge battery 120 with use of the operating terminal 153 and the management device 900K.

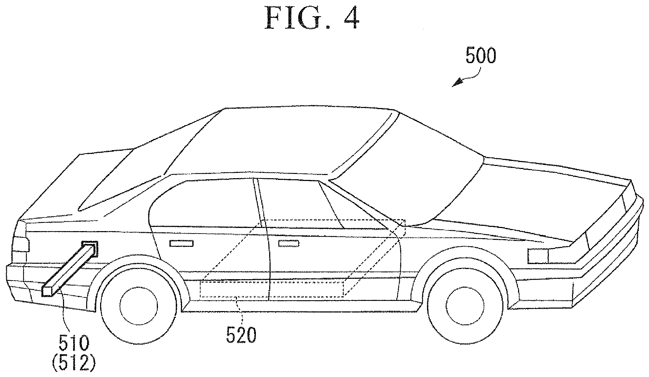

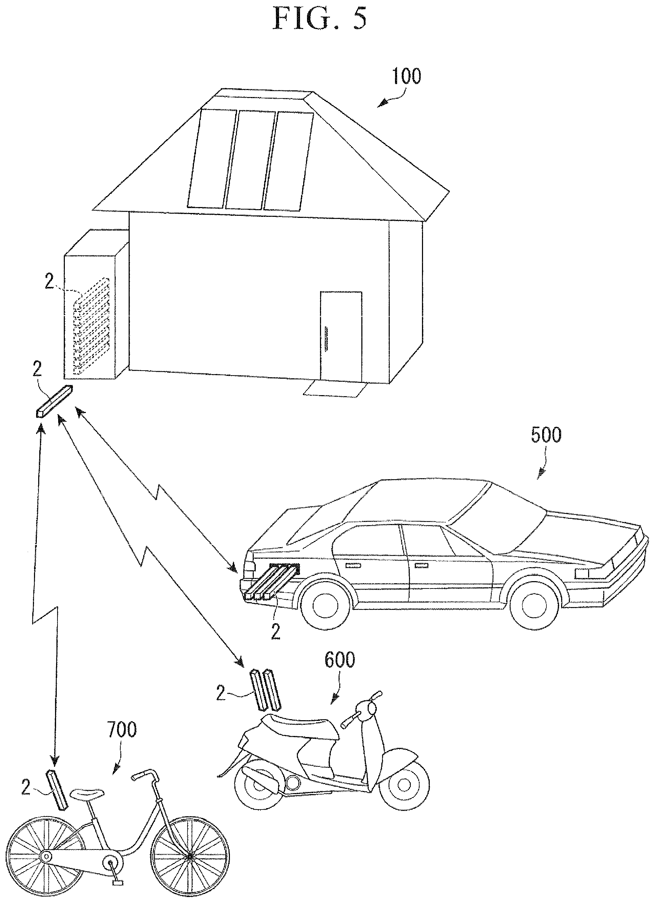

Next, an example of an operation of the electric motorcar 500 is described, with reference to FIG. 1, FIG. 4, and FIG. 5. In the electric motorcar 500, the battery 512 of the cartridge battery 510 can supply cartridge battery output driving power supply (electric power) 52 to the electric motor 530. Moreover, in the electric motorcar 500, the main battery 520 is capable of supplying the main battery output driving power supply (electric power) 51 to the electric motor 530. The electric motor 530 is operated with the supplied electric powers 51 and 52. The electric motorcar 500 travels, using the driving power of the electric motor 530.

In the electric motorcar 500 of the present embodiment, when normally travelling, the main battery output driving power supply 51 is supplied from the main battery 520 to the electric motor 530. In the electric motorcar 500, when travelling normally, the electric motor 530 is driven by the main battery 520. On the other hand, when supply of electric power from the main battery 520 is stopped, for example, in a case where the main battery 520 has become empty, the cartridge battery output driving power supply (electric power) 52 is supplied from the cartridge battery 510 to the electric motor 530.

Moreover, when the main battery 520 has been used and become completely empty, and also when the cartridge battery 510 has been used and become completely empty, the cartridge battery 510 is replaced with another cartridge battery 2 (such as 610 and 710), and thereby it is possible to use the electric motorcar 500.

The electric motorcar 500 can transport the cartridge battery 2 (510) respectively between the individual residence 100, the shop 200, the automatic vending machine 300, and the emergency disaster shelter 800. Moreover, the electric motorcar 500 can have the cartridge battery 2 that was connected at the individual residence 100 for example, replaced at the shop 200 or the like. The electric motorcar 500 is capable of transporting the cartridge battery 2 that was charged at the individual residence 100, for example, to the shop 200.

The cartridge battery 2 that has been transported is capable of supplying electric power to the electrically powered device 3 disposed at the shop 200.

The management device 900K, based on the usage information of the cartridge battery 2 and the unique information of the cartridge battery 2 obtained from an ID of the cartridge battery 2, is capable of outputting information related to the amount of accumulated electricity in the cartridge battery 2 and the possible travelling distance of the electric motorcar 500.

The management device 900K is capable of obtaining usage information of the cartridge battery 2, based on a signal input received from the operating terminal through the Internet 400.

Here, the usage information includes information related to time of usage and the structure and performance (weight, electric power consumption, and the like) of the electric motorcar 500.

The management device 900K, based on the amount of accumulated electricity in the cartridge battery 2, the possible traveling distance, and the method of generating electric power (nuclear generation method, hydraulic generation method, wind generation method, solar generation method, and the like) to be used for charging the cartridge battery 2, is capable of deriving a cost (charging cost) required for charging the cartridge battery 2. The management device 900K, according to the derived cost, selects a method of generating electric power to be used for charging the cartridge battery 2, and is thereby capable of suppressing the cost. Moreover, the management device 900K, according to the derived cost, selects a period of time (for example, daytime, nighttime, or the like) for charging the cartridge battery 2, and is thereby capable of suppressing the cost.

Furthermore, the management device 900K, according to the derived cost, selects and commands an optimal charging method for charging the cartridge battery 2, and is thereby capable of suppressing the cost.

Moreover, the management device 900K is capable of deriving an amount of CO₂ emission, based on the amount of accumulated electricity in the cartridge battery 2, the possible traveling distance, and the method of generating electric power to be used for charging the cartridge battery 2. The management device 900K, according to the derived CO₂ emission amount, selects a method of generating electric power to be used for charging the cartridge battery 2, and is thereby capable of suppressing the amount of CO₂ emission. Furthermore, the management device 900K, according to the derived CO₂ emission amount, selects a period of time for charging the cartridge battery 2, and is thereby capable of suppressing the cost and the amount of CO₂ emission. Moreover, the management device 900K, according to the derived CO₂ emission amount, selects and commands an optimal charging method for charging the cartridge battery 2, and is thereby capable of suppressing the cost and the amount of CO₂ emission.

As for the electric motorcar 500, the management device 900K is capable of outputting information related to the possible traveling distance of the electric motorcar 500, as risk information. The management device 900K is capable of deriving risk information based on the usage information of the cartridge battery 2 and the unique information of the cartridge battery 2 obtained from an ID. As described above, the management device 900K is capable of deriving the risk information, based on ID information (information related to charging history and the like) supplied from the operating terminal through the Internet 400. The management device 900K is capable of outputting a command signal to execute recovery of the cartridge battery 2, based on the information related to the history of charging made on the cartridge battery 2, obtained from the ID. Thereby, the cartridge battery 2 with the performance thereof having been deteriorated is excluded from circulation and, for example, sent to the maker of the battery for maintenance or reuse.

Next, an example of an operation of the electric motorcycle 600 is described. In the electric motorcycle 600, the battery 612 of the cartridge battery 610 supplies cartridge battery output driving power supply (electric power) 61 to the electric motor 620. The electric motor 620 is operated with the supplied electric power 61. The electric motorcycle 600 travels, using the driving power of the electric motor 620.

Next, an example of an operation of the electric bicycle 700 is described. In the electric bicycle 700, the battery 712 of the cartridge battery 710 supplies cartridge battery output driving power supply (electric power) 71 to the electric motor 720. The electric motor 720 is operated with the supplied electric power 71. The electric bicycle 700 travels, using the driving power of the electric motor 720.

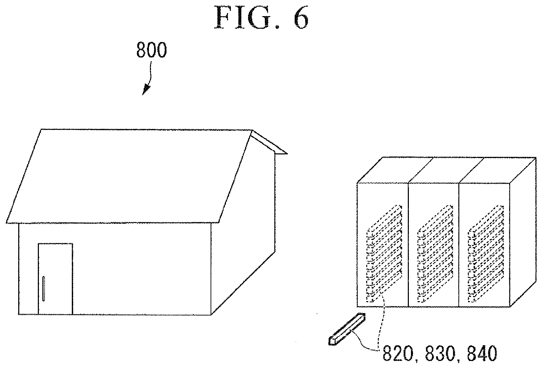

Next, an example of an operation of the cartridge battery 820 at the emergency disaster shelter 800 is described, with reference to FIG. 1 and FIG. 6. At the emergency disaster shelter 800, the batteries 822, 832, and 842 of the cartridge batteries 820, 830, and 840, supply cartridge battery output emergency power supply (electric power) 55 to either one of the power supply converter 850 and the emergency communication device 860.

The power supply converter 850 converts the cartridge battery output emergency power supply 55 into household power supply 56, and outputs it. The emergency communication device 860 uses the cartridge battery output emergency power supply 55 as a power supply, and transmits and receives emergency communication data 57 to thereby perform emergency communications.

Next, there is described in detail an operation of the entire battery system 1 according to the present embodiment, with reference to FIG. 1 to FIG. 7.

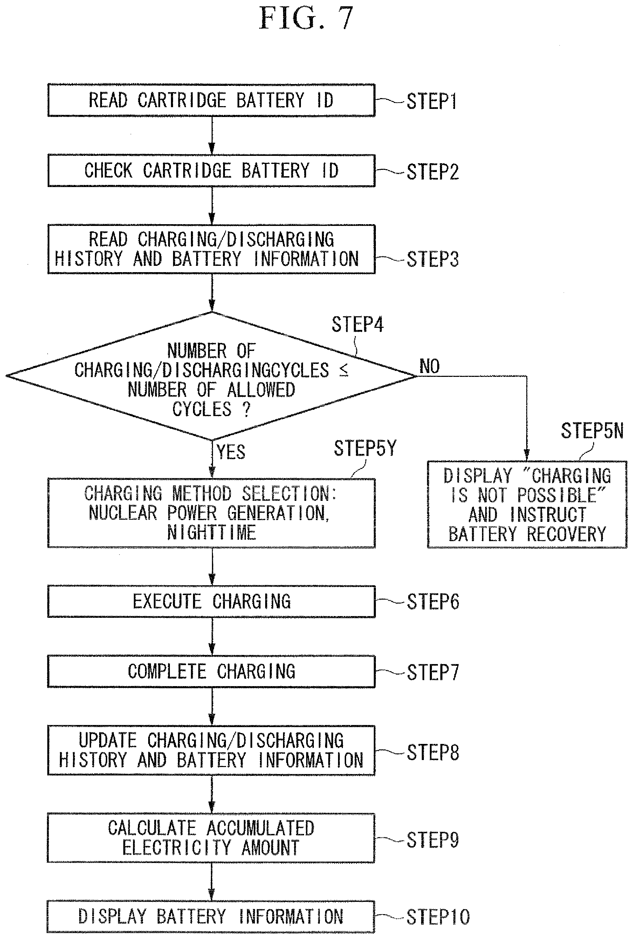

First, there is described, with reference to the flow chart in FIG. 7, an operation in a case of charging the cartridge battery 120 of the home battery 110 at the individual residence 100.

The operating terminal 153 of the cartridge battery charger 150 reads the ID 10 from the cartridge battery ID 121 of the cartridge battery 120 (STEP 1).

The ID 10 is a unique number or the like assigned to an individual cartridge battery 120.

Next, the operating terminal 153 converts the read ID 10 into the Internet data 11, and transmits it as the Internet data 12 via the Internet 400 to the management server 910 at the battery management center 900.

The management server 910 checks the ID 10 from the received Internet data 12 against the battery management data 13 on the database 920 (STEP 2), and reads information related to the battery 122 of the cartridge battery 120 indicated by the ID 10 (STEP 3).

In the present embodiment, the information related to the battery 122 includes information related to charging (discharging) history of the battery 122 (number of cycles), and unique information related to the battery 122 (name of maker, name of product, type of product, battery rank, number of allowed charging/discharging cycles, and the like).

The management server 910 transmits the read information related to the battery 122 as the Internet data 12 through the Internet 400 to be received on the operating terminal 153 as the Internet data 11.

The operating terminal 153 reads information related to the battery 122 from the received Internet data 11, adds "1 cycle" for the current charging/discharging cycle to the number of charging/discharging cycles, and then compares it with the number of allowed charging/discharging cycles (STEP 4).

If "the number of charging/discharging cycles is less than or equal to the number of allowed charging/discharging cycles", the charging will be commenced and the operating terminal 153 will instruct, with a screen display on the display device6, to select a power generating method (STEP 5Y).

On the other hand, based on the received information related to the battery 122, the operating terminal 153 outputs, to the charging control circuit 151, charging control information 14 that instructs an optimal charging method according to the battery 122 related information (name of maker, name of product, type of product, battery rank, number of allowed charging/discharging cycles, and the like) of the battery 122 to be charged and the current number of charging/discharging cycles.

If "the number of charging/discharging cycles is greater than the number of allowed charging/discharging cycles", charging will be impossible and the operating terminal 153 will onscreen-display on the display device 6 that charging is impossible, and will display a screen to instruct recovery of the battery (STEP 5N).

In a case where recovery of the battery is instructed, the cartridge battery is returned to a recovery agent or battery maker to get the resource recovered, and is reused for a new cartridge battery.

In the selection of a power generating method, a power generating method is selected between nuclear power generation, oil-fired power generation, coal-fired power generation, hydraulic power generation, wind power generation, solar power generation, and the like, and use of nighttime use of electric power or the like is selected. For example, in a case where the nuclear power generation and nighttime electric power are selected, then within a period of time in which nighttime electric power is applied, the nuclear-generated electric power 15 generated by the power generator 951 at the nuclear power generating station 950 is converted into the cartridge battery charging power supply 19 by the power supply converter 160, with use of the electric power supplied as the household power supply 18 to the individual residence 100 via the power transmission/distribution network 980, and output to the charging control circuit 151.

Moreover, in a case where the solar power generation is selected as the power generating method, charging is performed with use of the solar-generated electric power 21 generated with the solar light 20 irradiated on the solar power generator 170 disposed at the individual residence 100. The solar-generated electric power 21 is input to the power supply converter 152 of the cartridge battery charger 150, and converted into the cartridge battery charging power supply 22.

The cartridge battery charging power supply 22 is output from the power supply converter 152, and input to the charging control circuit 151. The charging control circuit 151 charges the battery 122 of the cartridge battery 120 with an optimal charging method according to the charging control information 14 input from the operating terminal 153 (STEP 6 and STEP 7).

Having completed charging, the operating terminal 153 outputs the charge completion and the power generating method as the Internet data 11, via the Internet 400, to be received on the management server 910 at the battery management center 900 as the Internet data 12.

The management server 910 adds 1 cycle of the current charging to the charging/discharging history (number of cycles) of the information related to the battery 122 of the cartridge battery 120 indicated by the ID 10 on the database 920, and updates it along with the power generating method.

The management server 910, according to the updated information related to the battery 122 (charging/discharging history of the battery (number of cycles), name of maker, name of product, type of product, battery rank, number of allowed charging/discharging cycles, and the like) and the database 920, calculates the amount of accumulated electricity in the battery and the risk thereof.

The database 920 has a charging/discharging characteristics database based on battery maker, battery product type, number of charging/discharging cycles, and charging method, and it is possible, if updated information related to the battery 122 (charging/discharging history of the battery (number of cycles), name of maker, name of product, type of product, battery rank, number of allowed charging/discharging cycles, and the like) is given, to calculate the amount of accumulated electricity when fully charged (for example, AH (ampere hour)) and the risk thereof (for example, %).

The battery management server 910 transmits the calculated amount of accumulated electricity in the battery and the risk thereof as the Internet data 12, via the Internet 400, to be received on the operating terminal 153 as the Internet data 11.

The operating terminal 153 reads the amount of accumulated electricity in the battery and the risk thereof from the received Internet data 11, and displays it (STEP 9).

In the above description, there has been described the operation of charging the cartridge battery 120 of the home battery 110 at the individual residence 100.

Next, there is described, with reference to the flow chart in FIG. 7, an operation in a case of using the cartridge battery 120 of the home battery 110 at the individual residence 100 that has been charged.

First, on the operating terminal 153, there is input usage information of the battery 122 to be used (purpose of use (electric motorcar, electric motorcycle, or electric bicycle) and the information thereof (name of maker, type of vehicle, name of product, year of make, and the like)).

The operating terminal 153, as with the case of charging, reads the ID 10 from the cartridge battery ID 121 of the cartridge battery 120.

Next, the operating terminal 153 converts the input usage information of the battery 122 and the read ID 10 into the Internet data 11, and transmits it as the Internet data 12 via the Internet 400 to the management server 910 at the battery management center 900.

The management server 910 checks the usage information of the battery 122 and the ID 10 from the received Internet data 12 against the battery management data 13 on the database 920, and reads information related to the battery 122 of the cartridge battery 120 indicated by the ID 10, the amount of accumulated electricity therein, and the risk thereof.

The management server 910, based on the usage information of the battery 122 (purpose of use (electric motorcar, electric motorcycle, or electric bicycle) and the information thereof (name of maker, type of vehicle, name of product, year of make, and the like)), the information related to the battery 122, the amount of accumulated electricity therein, and the risk thereof, calculates a possible travelling distance based on the usage information of the battery 122 and the risk thereof.

The management server 910 transmits the calculated possible travelling distance, the risk thereof, the information related to the battery 122, the amount of accumulated electricity therein, and the risk thereof, as the Internet data 12 through the Internet 400 to be received on the operating terminal 153 as the Internet data 11.

The operating terminal 153, reads from the received Internet data 11, the possible traveling distance, the risk thereof, the battery information, the amount of accumulated electricity therein, and the risk thereof, and displays them on the display device 6.

Moreover, the operating terminal 153 calculates a charging cost (yen), carbon tax (yen), and CO₂ emission amount (kg) based on the amount of accumulated electricity, the risk thereof, and the power generating method, and displays them on the display device 6 (STEP 10).

In the above description, there has been described the operation in a case of using the cartridge battery 120 of the home battery 110 at the individual residence 100 that has been charged.

The charging operation and use operation after charging at the shop 200 such as a convenience store, home center, and charging station, are also similar to the operation performed at the individual residence 100.

At the shop 200, a number of charged cartridge batteries are available, and a purchaser can freely select and purchase a battery by comparing, on the operating terminal 223, the battery information, possible traveling distance and the risk thereof, cost, carbon tax, and CO₂ emission amount, of each cartridge battery.

When purchasing a cartridge battery at the shop 200, a purchase cannot be made unless a used cartridge battery is recovered in exchange.

On the other hand, the charging operation and use operation after charging in the case of the cartridge battery automatic vending machine 300, are also similar to the operation performed at the individual residence 100.

In the automatic vending machine 300, as with the shop 200, a number of charged cartridge batteries are available although the availability thereof is not as high as that at the shop 200, and a purchaser can freely select and purchase a battery by comparing, on the operating terminal 323, the battery information, possible traveling distance and the risk thereof, cost, carbon tax, and CO₂ emission amount, of each cartridge battery.

When purchasing a cartridge battery from the automatic vending machine 300, a new charged cartridge battery cannot be purchased unless a used cartridge battery is inserted.

Moreover, it is possible to automatically charge the recovered used cartridge batteries with use of the solar power generator 340 to thereby repeatedly sell them.

In the above description, there have been described the operation at the time of charging and the operation at the time of purchasing a charged battery, at the shop 200 such as convenience store, home center, and charging station, and at the cartridge battery automatic vending machine 300.

A cartridge battery charged at the individual residence 100, a cartridge battery purchased at the shop 200, and a cartridge battery purchased from the cartridge battery automatic vending machine 300, can be inserted into the electric motorcar 500, the electric motorcycle 600, or the electric bicycle 700, to be thereby used for its intended purpose.

In a case of the electric motorcar 500, it is possible to mount a plurality of the cartridge batteries 510, Moreover, the electric motorcar 500 has, in addition to the battery 512 of the cartridge battery 510, the main battery 520 mounted thereon, and when travelling normally, the main battery 520 supplies the main battery output driving power supply 51 to the electric motor 530 to thereby perform traveling, while the battery 512 of the cartridge battery 510 is used only when the main battery 520 becomes empty.

Also in a case of the electric motorcycle 600, it is possible to mount a plurality of the cartridge batteries 610. Moreover, in a case of a large electric motorcycle 600, as with the electric motorcar 500, a configuration is also possible where a main battery is mounted in addition to the battery 612 of the cartridge battery 610, and when traveling normally, the main battery supplies main battery power supply to the electric motor 620 to thereby perform traveling, while the battery 612 of the cartridge battery 610 is used only when the main battery becomes empty.

In a case of the electric bicycle 700, as with the case of a current electric bicycle, traveling is possible only by inserting the cartridge battery 710.

At the emergency disaster shelter 800, there are a plurality of the cartridge batteries 820, 830, and 840, and the emergency battery 810, into which the cartridge batteries 820, 830, and 840 can be inserted, and each user brings and inserts a charged battery for use. For example, the cartridge battery is transported on an electric vehicle including at least one of the electric motorcar 700, the electric motorcycle 600, and then electric bicycle 700, and thereby the cartridge battery can be brought in.

The cartridge battery emergency power supply 55 output from the batteries 822, 832, and 842 ofaplurality of the cartridge batteries 820, 830, and 840, is input to the power supply converter 850 and the emergency communication device 860.

The power supply converter 850 converts the input cartridge battery emergency power supply 55 into the emergency power supply 56 that can be used as household power supply, to be used as power supply at the emergency disaster shelter 800.

Moreover, the cartridge battery emergency power supply 55 input to the emergency communication device 860 is directly used as power supply for the emergency communication device 860, and the emergency communication device 860 transmits and receives emergency communication data 57, to be thereby utilized for emergency communications.

The emergency communication device 860 can have a cartridge battery directly inserted therein, and can therefore be portably used. Moreover, a used cartridge battery is brought into an area not affected by the disaster to be charged, and it can be taken back to be repeatedly used.

As described above, according to the present embodiment, there is used the cartridge battery 2 that is detachable (exchangeable) and easy to transport and that has the same outer shape and size, and it is consequently possible to manufacture a large quantity of only a single type product for various types of applications including not only the electric motorcar 500 but also the electric motorcycle 600, the electric bicycle 700, the home battery 110, and the emergency battery 810. Furthermore, standardization is also possible. If standardization is realized, it will become possible, regardless of maker or product type, to manufacture only a single product type of the cartridge batteries 2, thereby reducing the cost.

Moreover, in the present embodiment, in a case of operating an electric motorcar or large electric motorcycle that requires a large capacity and takes a large scale battery, for example, the main battery required for the electric motorcar to travel is equipped on the electric motorcar as a large scale fixed battery, and this is complemented by an exchangeable cartridge battery 2 that has a battery capable of accumulating an amount of electric energy only for minimum traveling. Thus, it is possible to reduce the size of the cartridge battery 2. Consequently, anyone including the owner of the electric motorcar can easily replace the cartridge battery 2 without an exchange facility.

Moreover, a preliminarily charged cartridge battery 2 and a used cartridge battery 2 can be easily and instantly exchanged, and it is consequently possible, even in a case where the battery 2V is empty, to eliminate need for charging time.

Furthermore, the cartridge battery 2 according to the present embodiment can be easily transported and can be charged anywhere, while allowing a selection of electric power of an energy source of the cartridge battery, that is, electric power of an energy source of the electric motorcar 500, the electric motorcycle 600, the electric bicycle 700, the home battery, and the emergency battery 810. Consequently, with use of carbon-free electric power or electric power with a low CO₂ emission amount, it is possible to reduce CO₂ emission and thereby reduce carbon tax. Moreover, it is possible to reduce electricity cost using electric power at midnight, and a self-owned solar power generator at an individual residence can be used.

Moreover, a plurality of the cartridge batteries 2 according to the present embodiment can be detached, can be easily transported, and have the same outer shape and size, and their battery charging history, the battery information, and the like are centrally managed using individually unique IDs (identifiers). Consequently, the cartridge battery 2 is such that only the accumulated electric power energy can be purchased and the main body of the cartridge battery 2 is circulated (re-used and circulated), and it is therefore possible to eliminate the need for purchasing an expensive cartridge battery every time.

Moreover, a plurality of the cartridge batteries 2 according to the present embodiment can be detached, can be easily transported, and have the same outer shape and size, and it is consequently possible to use the cartridge battery 2 for any one of the cartridge battery of the electric motorcar 500, the cartridge battery of the electric motorcycle 600, the cartridge battery of the electric bicycle 700, the home battery 110, and the emergency battery 810. That is to say, the cartridge battery 2 can be transported and can be made a versatile common standard battery for multiple purposes.

Moreover, according to the present embodiment, the cartridge battery 2 can be detached, can be easily transported, and has the same outer shape and size, and it can be charged anywhere and does not require an exchanging facility.

Furthermore, the cartridge battery 2 can be charged at any one of the individual residence 100, the shop 200 such as convenience store, home center and charging station, and the cartridge battery automatic vending machine 300. A charged cartridge battery can be exchanged or purchased. Moreover, the cartridge battery 2 can be exchanged anywhere including a home, convenience store, automatic vending machine, home center, and road. Thus, the cartridge battery 2 does not require an exchanging facility and can be made a versatile common standard battery, and it can be detached and charged on any electric power.

Furthermore, the cartridge battery 2 is such that it is detachable, can be transported easily, has the same outer shape, only accumulated electric power energy is to be purchased, and the main body of the cartridge battery is circulated (re-used and circulated), and also the number of charges of all of the cartridge batteries, deterioration in performance, and the like are centrally managed at the battery management center 900. Thereby, it is possible to stop battery-use of all cartridge batteries at an appropriate time with no omission, and to reuse them as resources. Consequently, the cartridge battery 2 enables effective use of resources.

Moreover, the cartridge battery 2 can be easily transported, has the same outer shape and size, can be charged anywhere, does not require an exchanging facility, and can be detached and charged on any electric power, and consequently energy transportation becomes possible with use of the cartridge battery 2.

Furthermore, the cartridge battery 2 can be easily transported, does not require an exchanging facility, has the same outer shape, can be detached and charged on any electric power, and can be used anywhere, and it is consequently possible, in the event of a disaster, for individuals to bring and connect a plurality of the cartridge batteries 2 to thereby use them as a large-capacity emergency power supply device, while it is possible, in a case where the batteries are empty, to individually charge them to thereby continuously use them as a large-capacity emergency power supply device.

Moreover, as the cartridge battery that forms the emergency battery 810, it is possible to use at least one of the cartridge battery 510 used for the electric motorcar 500, the cartridge battery 610 used for the electric motorcycle 600, and the cartridge battery 710 used for the electric bicycle 700.

Furthermore, in a case of the electric motorcar 500 that requires a large capacity, there may be freely made an optimal design to achieve maximum performance while taking efficiency into consideration, in which rather than dividing the main battery required for travelling into a plurality of units, only the cartridge battery with a separate battery capable of only accumulating a sufficient amount of electric energy to enable minimum traveling is made exchangeable, and the large-scale/large-capacity main battery required for the electric motorcar 500 to travel is provided as a fixed battery.

In the embodiment described above, on at least one of the electric motorcar 500, the electric motorcycle 600, and the electric bicycle 700, there may be equipped a charger capable of charging the battery 2V.

In the embodiment described above, a fixed battery may be disposed at the individual residence 100, the shop 200, the automatic vending machine 300, and the like. The cartridge battery 2, when electric power supply from the power generating stations 950, 960, 970, the solar power generator, or the fixed battery, to the electrically powered device 3 at the individual residence 100 and the shop 200, and in the automatic vending machine 300 is stopped, is capable of supplying electric power to the electrically powered device 3.

According to the present invention, a cartridge battery is made a versatile common standard battery that can be used for multiple purposes such as an electric bicycle battery, an electric motorcycle battery, and a home battery, and thereby it can be applied to many purposes. Particularly it is normally used as a home battery for accumulating energy for home power generation and self power consumption developed in response to CO₂ reduction; it is detached to be used as an electric motorcar battery when using an electric motorcar; it is detached to be used as an electric bicycle battery when using an electric bicycle; and it is detached to be used as an electric motorcycle battery when using an electric motorcycle. These ways of use are effective methods of utilization. Therefore, a contribution to industrial development can be made. Moreover, by gathering the cartridge batteries and connecting a number of the cartridge batteries in the event of a disaster, they can be used in conjunction for active usage as an important energy source in evacuation life.

## Claims

1. A management device (900K) comprising a server (900) configured to obtain information related to a cartridge battery (2) that includes a rechargeable battery (2V) is at least connected to either one of an electrically powered device (3) and a charging device (150, 220, 320) via a telecommunication line using an identifier (ID) assigned to said cartridge battery, and to output the obtained information related to said cartridge battery to a predetermined device (100, 200, 300) via said telecommunication line, **characterized in that**:
said information related to a cartridge battery includes information related to usage history of said cartridge battery, information related to performance of said cartridge battery, and risk information of said cartridge battery caused by usage thereof; and
said management device is configured to derive a cost required for charging said rechargeable battery based on said information related to a cartridge battery.

2. A management device according to claim 1, wherein said information related to usage history includes at least one of, a number of charges, an interval of charges, and a time of charges.

3. A management device according to claim 1 or 2, wherein said risk information includes information related to a degree of deterioration of said cartridge battery caused by usage thereof.

4. A management device according to any one of claims 1 to 3, wherein said electrically powered device is an electric vehicle (500, 600, 700) that travels by means of electric power from said cartridge battery, and said management device calculates said cost required for charging said rechargeable battery based on, an amount of accumulated electricity in said rechargeable battery, a possible traveling distance of said electric vehicle, and a method of generating electric power to be used for charging said rechargeable battery.

5. A management device according to claim 4, wherein said management device calculates an amount of CO₂ emission based on said amount of accumulated electricity in said rechargeable battery, said possible traveling distance of said electric vehicle, and said method of generating electric power to be used for charging said rechargeable battery.

6. A battery system comprising:
an electrically powered device (3);
a charging device (150, 220. 320); and
acartridge battery (2) that can be attached on and detached from said electrically powered device and said charging device, **characterized in that** said battery system further comprises
said management device (900K) according to any one of claims 1 to 5,
in which information related to said cartridge battery is communicated through a telecommunication line.

7. A method of managing a cartridge battery (2) that includes a rechargeable battery (2V), said method **characterized by** comprising:
obtaining information related to usage history from said cartridge battery;
displaying information related to performance of said cartridge battery and risk information, based on the obtained information related to the usage history of said cartridge battery; and
deriving a cost required for charging said rechargeable battery.

8. A program for executing on a computer procedures of:
obtaining information related to usage history of a cartridge battery (2) that includes a rechargeable battery (2V);
displaying information related to performance of said cartridge battery and risk information, based on the obtained information related to the usage history of said cartridge battery; and
deriving a cost required for charging said rechargeable battery.

## Patentansprüche

1. Verwaltungsvorrichtung (900K) mit einem Server (900) der ausgebildet ist, Information bezüglich einer Kartuschenbatterie (2) zu erhalten, die eine wiederaufladbare Batterie (2V) aufweist, die mit einem elektrisch betriebenen Gerät (3) und/oder einem Ladegerät (150, 220, 320) über eine Telekommunikationsleitung mit Hilfe eines der Kartuschenbatterie zugeordneten Identifizierers (ID) verbunden ist, und die erhaltenen, die Kartuschenbatterie betreffenden Informationen an ein vorbestimmtes Gerät (100, 200, 300) über die Telekommunikationsleitung auszugeben, **dadurch gekennzeichnet, dass** die die Kartuschenbatterie betreffenden Informationen Informationen betreffend den Gebrauchsverlauf der Kartuschenbatterie, Informationen betreffend die Leistung der Kartuschenbatterie und durch den Gebrauch der Kartuschenbatterie entstehende Risikoinformationen der Kartuschenbatterie aufweisen, und
die Verwaltungsvorrichtung ausgebildet ist, die Kosten für das Aufladen der wiederaufladbaren Batterie basierend auf den die Kartuschenbatterie betreffenden Informationen abzuleiten.

2. Verwaltungsvorrichtung nach Anspruch 1, wobei die den Gebrauchsverlauf betreffenden Informationen mindestens die Anzahl der Aufladungen, die Aufladungsintervalle und/oder die Aufladungsdauer umfassen.

3. Verwaltungsvorrichtung nach Anspruch 1 oder 2, wobei die Risikoinformationen Informationen über den durch den Gebrauch der Kartuschenbatterie entstehenden Grad der Verschlechterung der Kartuschenbatterie umfassen.

4. Verwaltungsvorrichtung nach einem der Ansprüche 1 bis 3, wobei das elektrisch betriebene Gerät ein Elektrofahrzeug (500, 600, 700) ist, das durch elektrische Energie von der Kartuschenbatterie angetrieben wird, wobei die Verwaltungsvorrichtung die für die Aufladung der wiederaufladbaren Batterie entstehenden Kosten basierend auf der Menge an in der wiederaufladbaren Batterie gespeicherten Elektrizität, der möglichen Fahrstrecke des Elektrofahrzeugs und einem Verfahren zum Erzeugen der für das Aufladen der wiederaufladbaren Batterie verwendeten elektrischen Energie berechnet.

5. Verwaltungsvorrichtung nach Anspruch 4, wobei die Verwaltungsvorrichtung die Menge der CO₂-Emission basierend auf der Menge an in der wiederaufladbaren Batterie gespeicherten Elektrizität, der möglichen Fahrstrecke des Elektrofahrzeugs und dem Verfahren zum Erzeugen der für das Aufladen der wiederaufladbaren Batterie verwendeten elektrischen Energie berechnet.

6. Batteriesystem mit:
einem elektrisch betriebenen Gerät (3);
einem Ladegerät (150, 220, 320); und
einer Kartuschenbatterie (2), die an dem elektrisch betriebenen Gerät und dem Ladegerät angebracht und von diesen abgenommen werden kann,
**dadurch gekennzeichnet, dass** das Batteriesystem ferner
die Verwaltungsvorrichtung (900K) nach einem der Ansprüche 1 bis 5 aufweist,
in der die Kartuschenbatterie betreffende Informationen über eine Telekommunikationsleitung übertragen werden.

7. Verwaltungsverfahren für eine Kartuschenbatterie (2), die eine wiederaufladbare Batterie (2V) aufweist, wobei das Verfahren **dadurch gekennzeichnet ist, dass** es aufweist:
Empfangen von Informationen betreffend den Gebrauchsverlauf der Kartuschenbatterie, Darstellen von Informationen betreffend die Leistung der Kartuschenbatterie und Risikoinformationen, basierend auf den erhaltenen Informationen betreffend den Gebrauchsverlauf der Kartuschenbatterie, und
Ableiten der Kosten für das Aufladen der wiederaufladbaren Batterie.

8. Programm zum Durchführen der folgenden Schritte auf einem Computer:
Empfangen von Informationen betreffend den Gebrauchsverlauf der Kartuschenbatterie (2), die eine wiederaufladbare Batterie (2V) aufweist;
Darstellen von Informationen betreffend die Leistung der Kartuschenbatterie und Risikoinformationen, basierend auf den erhaltenen Informationen betreffend den Gebrauchsverlauf der Kartuschenbatterie, und
Ableiten der Kosten für das Aufladen der wiederaufladbaren Batterie.

## Revendications

1. Dispositif de gestion (900K) comprenant un serveur (900) conçu pour obtenir des informations relatives à une cartouche de batterie (2) qui comporte une batterie rechargeable (2V) qui est au moins connectée soit à un dispositif électrique (3) soit à un dispositif de charge (150, 220, 320), par le biais d'une ligne de télécommunication, à l'aide d'un identifiant (ID) attribué à ladite cartouche de batterie, et pour délivrer les informations obtenues relatives à ladite cartouche de batterie à un dispositif prédéterminé (100, 200, 300) par le biais de ladite ligne de télécommunication, **caractérisé en ce que** :
lesdites informations relatives à une cartouche de batterie incluent des informations relatives à un historique d'utilisation de ladite cartouche de batterie, des informations relatives à des performances de ladite cartouche de batterie et des informations sur les risques concernant ladite cartouche de batterie, causés par son utilisation ; et
ledit dispositif de gestion est conçu pour déterminer un coût requis pour charger ladite batterie rechargeable, sur la base desdites informations relatives à une cartouche de batterie.

2. Dispositif de gestion selon la revendication 1, dans lequel lesdites informations relatives à un historique d'utilisation incluent au moins un nombre de charges ou un intervalle entre charges ou encore une durée de charges.

3. Dispositif de gestion selon la revendication 1 ou 2, dans lequel lesdites informations sur les risques incluent des informations relatives à un degré de détérioration de ladite cartouche de batterie, causée par son utilisation.

4. Dispositif de gestion selon l'une quelconque des revendications 1 à 3, dans lequel ledit dispositif électrique est un véhicule électrique (500, 600, 700) qui se déplace au moyen d'une énergie électrique provenant de ladite cartouche de batterie, et ledit dispositif de gestion calcule ledit coût requis pour charger ladite batterie rechargeable sur la base d'une quantité d'électricité accumulée dans ladite batterie rechargeable, d'une distance de déplacement possible dudit véhicule électrique, et d'un procédé de production d'énergie électrique à mettre en oeuvre pour charger ladite batterie rechargeable.

5. Dispositif de gestion selon la revendication 4, dans lequel ledit dispositif de gestion calcule une quantité d'émission de CO₂ sur la base de ladite quantité d'électricité accumulée dans ladite batterie rechargeable, de ladite distance de déplacement possible dudit véhicule électrique et dudit procédé de production d'énergie électrique à mettre en oeuvre pour charger ladite batterie rechargeable.

6. Système de batterie comprenant :
un dispositif électrique (3) ;
un dispositif de charge (150, 220, 320) ; et
ladite cartouche de batterie (2) qui peut être fixée audit dispositif électrique et audit dispositif de charge ou en être détachée,
**caractérisé en ce que** ledit système de batterie comprend en outre :
ledit dispositif de gestion (900K) selon l'une quelconque des revendications 1 à 5,
dans lequel des informations relatives à ladite cartouche de batterie sont communiquées par le biais d'une ligne de télécommunication.

7. Procédé de gestion d'une cartouche de batterie (2) qui comporte une batterie rechargeable (2V), ledit procédé étant **caractérisé en ce qu'**il comprend les étapes consistant à :
obtenir des informations relatives à un historique d'utilisation, à partir de ladite cartouche de batterie ;
afficher des informations relatives à des performances de ladite cartouche de batterie et des informations sur les risques, sur la base des informations obtenues relatives à l'historique d'utilisation de ladite cartouche de batterie ; et
déterminer un coût requis pour charger ladite batterie rechargeable.

8. Programme destiné à exécuter sur un ordinateur des procédures consistant à :
obtenir des informations relatives à un historique d'utilisation d'une cartouche de batterie (2) qui comporte une batterie rechargeable (2V) ;
afficher des informations relatives à des performances de ladite cartouche de batterie et des informations sur les risques, sur la base des informations obtenues relatives à l'historique d'utilisation de ladite cartouche de batterie ; et
déterminer un coût requis pour charger ladite batterie rechargeable.
